# EUROPÄISCHE PATENTANMELDUNG

(11) **EP 3 703 318 A1**
(43) Veröffentlichungstag der Anmeldung: **02.09.2020**
(21) Anmeldenummer: 20155086.0
(22) Anmeldetag: 03.02.2020
(51) Int. Cl.: H04L 12/28, G06Q 10/06, H04W 4/00

(54) **VERFAHREN UND VORRICHTUNG ZUM BEREITSTELLEN EINER INFORMATION ÜBER EIN HAUSHALTGERÄT FÜR EINEN NUTZER DES HAUSHALTGERÄTS UND HAUSHALTGERÄT MIT EINER VORRICHTUNG**

(30) Priorität: 27.02.2019 DE 102019104909
(71) Anmelder: Miele & Cie. KG, 33332 Gütersloh (DE)
(72) Erfinder: Wegener, Dirk, 33649 Bielefeld (DE)

(57) **Zusammenfassung**

Der hier vorgestellte Ansatz betrifft ein Verfahren zum Bereitstellen einer Information über ein Haushaltgerät (105) für einen Nutzer (110) des Haushaltgeräts (105). Das Verfahren weist einen Schritt des Einlesens, einen Schritt des Auswählens und einen Schritt des Sendens auf. Im Schritt des Einlesens wird ein Statussignal (130) eingelesen, das eine Statusinformation über das Haushaltgerät (105) repräsentiert. Im Schritt des Auswählens wird zumindest ein Nutzer (110) unter Verwendung des Statussignals (130) und eines Zuständigkeitenplans (140) und/oder eines Anwesenheitssignals (145) ausgewählt, wobei der Zuständigkeitenplan (140) eine Mehrzahl von hinterlegten Nutzern (110) des Haushaltgeräts (105) aufweist und/oder das Anwesenheitssignal (145) eine Anwesenheitsinformation über eine Anwesenheit zumindest eines im Zuständigkeitenplan (140) hinterlegten Nutzers (110) aufweist. Im Schritt des Sendens wird ein Informationssignal (150) an den im Schritt des Auswählens ausgewählten Nutzer (110) gesendet, wobei das Informationssignal (150) die Statusinformation und/oder eine Zusatzinformation umfasst.

## Beschreibung

Der hier vorgestellte Ansatz betrifft ein Verfahren und eine Vorrichtung zum Bereitstellen einer Information über ein Haushaltgerät für einen Nutzer des Haushaltgeräts und ein Haushaltgerät mit einer Vorrichtung

Neue Generationen von Haushaltsgeräten wie z. B. Haushaltsgeschirrspüler verfügen über ein WLAN-Modul und eine Funktion, die es ermöglicht, dass mobile Endgeräte wie Smartphones oder Tablets über eine App das jeweilige Gerät überwachen und steuern können. Neben Fehlermeldungen und Statusinformationen, die der Nutzer über das mobile Endgerät schon heute von dem Haushaltsgerät empfangen kann, wurden darüber hinaus auch ein automatischer Start des Geschirrspülers über einen Wochenplaner und eine einfache Nachbestellung von Reinigungs- und Pflegemitteln ermöglicht.

Dem hier vorgestellten Ansatz liegt die Aufgabe zugrunde, ein verbessertes Verfahren und eine verbesserte Vorrichtung zum Bereitstellen einer Information über ein Haushaltgerät für einen Nutzer des Haushaltgeräts und ein Haushaltgerät mit einer verbesserten Vorrichtung zu schaffen.

Erfindungsgemäß wird diese Aufgabe durch ein Verfahren zum Bereitstellen einer Information über ein Haushaltgerät für einen Nutzer des Haushaltgeräts, ferner eine Vorrichtung zum Bereitstellen einer Information über ein Haushaltgerät für einen Nutzer des Haushaltgeräts sowie ein Haushaltgerät mit einer Vorrichtung mit den Merkmalen bzw. Schritten der Hauptansprüche gelöst. Gegenstand des vorliegenden Ansatzes ist auch ein Computerprogramm. Vorteilhafte Ausgestaltungen und Weiterbildungen des Ansatzes ergeben sich aus den nachfolgenden Unteransprüchen.

Die mit dem hier vorgestellten Ansatz erreichbaren Vorteile bestehen darin, dass Statusinformationen über ein Haushaltgerät lediglich an einen oder mehrere definierte Nutzer des Haushaltgeräts ausgegeben werden. Hierbei werden unnötige Informationen an unbeteiligte oder nicht zuständige Nutzer des Haushaltgeräts verhindert.

Ein Verfahren zum Bereitstellen einer Information über ein Haushaltgerät für einen Nutzer des Haushaltgeräts weist einen Schritt des Einlesens, einen Schritt des Auswählens und einen Schritt des Sendens auf. Im Schritt des Einlesens wird ein Statussignal eingelesen, das eine Statusinformation über das Haushaltgerät repräsentiert. Im Schritt des Auswählens wird zumindest ein Nutzer unter Verwendung des Statussignals und eines Zuständigkeitenplans und zusätzlich oder alternativ eines Anwesenheitssignals ausgewählt, wobei der Zuständigkeitenplan eine Mehrzahl von hinterlegten Nutzern des Haushaltgeräts aufweist und zusätzlich oder alternativ das Anwesenheitssignal eine Anwesenheitsinformation über eine Anwesenheit zumindest eines im Zuständigkeitenplan hinterlegten Nutzers aufweist. Im Schritt des Sendens wird ein Informationssignal an den im Schritt des Auswählens ausgewählten Nutzer gesendet, wobei das Informationssignal die Statusinformation und zusätzlich oder alternativ eine Zusatzinformation umfasst.

Dieses Verfahren kann beispielsweise in Software oder Hardware oder in einer Mischform aus Software und Hardware beispielsweise in einem Steuergerät oder einer App implementiert sein.

Das Statussignal kann eine von dem Haushaltgerät bereitgestellte oder über das Haushaltgerät einlesbare Statusinformation über das Haushaltgerät repräsentieren, beispielsweise eine Information darüber, dass ein Betriebsprogramm des Haushaltgeräts beendet wurde oder eine Wartung des Haushaltgeräts erforderlich ist oder, dass das Gerät einen Defekt aufweist. Das Statussignal kann eine Information darüber enthalten, dass ein Handeln eines Nutzers erforderlich ist. Das Statussignal kann ein elektrisches Signal sein, das drahtlos oder drahtgebunden über eine geeignete Schnittstelle übertragen werden kann. Das Haushaltgerät kann beispielsweise eine Geschirrspülmaschine, eine Waschmaschine, ein Gargerät, ein Kühlgerät, eine Dunstabzugshaube oder ein Kaffeeautomat sein. Das Anwesenheitssignal kann beispielsweise ein Verbindungssignal sein, das eine Verbindung, beispielsweise eine WLAN-Verbindung, eines mobilen Geräts des Nutzers mit dem Haushaltgerät repräsentieren kann. Das Anwesenheitssignal kann eine Information über eine Position des Nutzers oder seines mobilen Geräts aufweisen. Ein solches Anwesenheitssignal kann dazu dienen, um festzustellen, ob ein beliebiger oder ein bestimmter im Zuständigkeitenplan hinterlegter Nutzer in der Nähe ist, um das Haushaltgerät zu bedienen. Bei dem Zuständigkeitenplan kann in Form digitaler Daten in einer Speichereinrichtung gespeichert sein. Die Zusatzinformation kann eine persönliche Anrede des Nutzers und zusätzlich oder alternativ eine Handlungsaufforderung repräsentieren, damit der ausgewählte Nutzer erkennen kann, dass er persönlich durch das Informationssignal angesprochen werden soll. Das Informationssignal kann drahtgebunden oder drahtlos über eine geeignete Schnittstelle übertragen werden, beispielsweise an ein mobiles Gerät des Nutzers. Das hier vorgestellte Verfahren ermöglicht es somit, dass das Informationssignal an lediglich einen relevanten Nutzer ausgegeben wird und andere Nutzer, welche beispielsweise nicht anwesend sind und zusätzlich oder alternativ für eine Bedienung des Haushaltgeräts nicht zuständig sind, von einer für sie unnötigen Informationen verschont bleiben.

Das Verfahren kann auch einen Schritt des Ausgebens aufweisen, in dem die Statusinformation und zusätzlich oder alternativ die Zusatzinformation unter Verwendung des Informationssignals und einer Ausgabeeinrichtung ausgegeben wird. Bei der Ausgabeeinrichtung kann es sich beispielsweise um ein Display oder Lautsprecher eines mobilen Geräts handeln. So kann die Statusinformation und zusätzlich oder alternativ die Zusatzinformation an einem Mobiltelefon oder einer Smartwatch des ausgewählten Nutzers optisch und zusätzlich oder alternativ akustisch angezeigt werden, beispielsweise unter Verwendung einer App. Eine optische Anzeige kann in Form einer Textnachricht, beispielsweise einer Push-Nachricht, erfolgen. Dies schafft eine zuverlässige Kommunikationsmöglichkeit.

Im Schritt des Sendens kann gemäß einer Ausführungsform ein weiteres Informationssignal an zumindest einen in dem Zuständigkeitenplan hinterlegten weiteren Nutzer gesendet werden, wobei das weitere Informationssignal die Statusinformation und zusätzlich oder alternativ eine weitere Zusatzinformation umfasst, die sich von der Zusatzinformation unterscheidet. Bei dem weiteren Nutzer kann es sich um einen oder mehrere oder alle in dem Zuständigkeitenplan hinterlegten Nutzer handeln, welche im Schritt des Auswählens nicht ausgewählt wurden, und welche demnach nicht zur Bedienung des Haushaltgeräts zuständig sind. Die weitere Zusatzinformation kann eine persönliche Anrede des weiteren Nutzers und zusätzlich oder alternativ eine Information darüber anzeigen, welcher Nutzer für die Bedienung des Haushaltgeräts zuständig ist. So kann der weitere Nutzer erkennen, dass er selbst nicht handeln muss.

Im Schritt des Auswählens kann zumindest ein Nutzer aus dem Zuständigkeitenplan ausgewählt werden, für den das Anwesenheitssignal eine Anwesenheit anzeigt, beispielsweise eine Anwesenheit in der Nähe des Haushaltgeräts. Das Anwesenheitssignal kann hierzu beispielsweise als das WLAN-Verbindungssignal des Nutzers eingelesen werden, das eine aktive Verbindung des Nutzers zu dem Haushaltgerät repräsentiert. So kann sichergestellt werden, dass der Nutzer in der Nähe des Haushaltgeräts ist und das Haushaltgerät schnell bedienen kann.

Zusätzlich oder alternativ kann im Schritt des Auswählens der Nutzer aus dem Zuständigkeitenplan ausgewählt werden, der unter Verwendung eines in dem Zuständigkeitenplan hinterlegten Zuständigkeitenalgorithmus als zuständiger Nutzer erkannt wird. Der Zuständigkeitenalgorithmus kann ein voreingestellter oder individuell festgelegter Algorithmus zur Festlegung von Zuständigkeiten sein. Beispielsweise können bestimmte in dem Zuständigkeitenplan hinterlegte Nutzer lediglich für bestimmte Haushaltgeräte als zuständig festgelegt sein, oder es kann eine regelmäßige oder individuell eingestellte Abfolge an Zuständigkeiten durch den Zuständigkeitenalgorithmus festgelegt sein. So kann im Schritt des Auswählens unter Verwendung des Zuständigkeitenalgorithmus ein nächster in der Abfolge oder alleinzuständiger Nutzer bezüglich des Statussignals ausgewählt werden. Ein solcher Zuständigkeitenalgorithmus dient einer Organisation von Zuständigkeiten in einem Haushalt mit mehren Nutzern.

Es kann beispielsweise im Schritt des Auswählens der Nutzer aus dem Zuständigkeitenplan ausgewählt werden, der unter Verwendung des in dem Zuständigkeitenplan hinterlegten Zuständigkeitenalgorithmus als zuständiger Nutzer erkannt wird, wenn das Anwesenheitssignal eine Anwesenheit des zuständigen Nutzers anzeigt. Wenn das Anwesenheitssignal hingegen anzeigt, dass der zuständige Nutzer nicht anwesend ist, kann beispielsweise ein im Zuständigkeitenplan nächster Nutzer ausgewählt werden und zusätzlich oder alternativ ein Nutzer, für den ein Anwesenheitssignal eine Anwesenheit anzeigt. Auch so kann sichergestellt werden, dass das Haushaltgerät möglichst schnell bedient wird.

Das Verfahren kann gemäß einer Ausführungsform einen Schritt des Generierens aufweisen, in dem der Zuständigkeitenplan unter Verwendung zumindest eines Eingabesignals, das eine Kontaktinformation eines Nutzers repräsentiert, und zusätzlich oder alternativ eines Zuständigkeitenalgorithmus der Zuständigkeitenplan generiert wird. Das Eingabesignal kann beispielsweise die Kontaktinformation in Form einer Telefonnummer des mobilen Geräts des Nutzers übermitteln oder repräsentieren, welche das Kontaktieren des Nutzers durch das Informationssignal ermöglicht. Das Eingabesignal kann ein von einem Nutzer durch Eingeben der Kontaktinformation in beispielsweise einer App eines Mobiltelefons bewirktes Signal sein. Auch der Zuständigkeitenalgorithmus kann durch einen Nutzer selbst festgelegt oder verändert werden.

Auch wenn der beschriebene Ansatz anhand eines Haushaltgeräts beschrieben wird, kann das hier beschriebe Verfahren entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Ein Haushaltgerät weist eine solche Vorrichtung auf. Dieses Haushaltgerät kann als Ersatz für bekannte Haushaltgeräte dienen, wobei das vorgestellte Haushaltgerät vorteilhafterweise die vorangehend beschriebenen Vorteile der Vorrichtung realisiert und somit ein persönliches Adressieren eines oder mehrerer Nutzer eines Haushaltgeräts bezüglich einer bevorstehenden Handlung ermöglicht. Das Haushaltgerät kann eine Geschirrspülmaschine, eine Waschmaschine, ein Gargerät, ein Kühlgerät, eine Dunstabzugshaube oder ein Kaffeeautomat sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ausführungsbeispiele des Ansatzes sind in den Zeichnungen rein schematisch dargestellt und werden nachfolgend näher beschrieben. Es zeigt
- Figur 1: eine schematische Darstellung einer Vorrichtung zum Bereitstellen einer Information über ein Haushaltgerät für einen Nutzer des Haushaltgeräts gemäß einem Ausführungsbeispiel;
- Figur 2: eine schematische Darstellung einer Vorrichtung gemäß einem Ausführungsbeispiel;
- Figur 3: eine schematische Darstellung einer Vorrichtung gemäß einem Ausführungsbeispiel; und
- Figur 4: ein Ablaufdiagramm eines Verfahrens zum Bereitstellen einer Information über ein Haushaltgerät für einen Nutzer des Haushaltgeräts gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

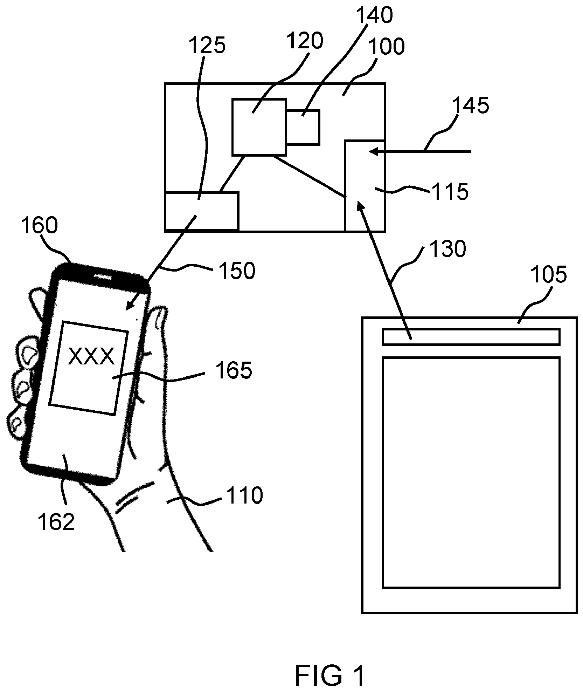

Figur 1 zeigt eine schematische Darstellung einer Vorrichtung 100 zum Bereitstellen einer Information über ein Haushaltgerät 105 für einen Nutzer 110 des Haushaltgeräts 105 gemäß einem Ausführungsbeispiel.

Die Vorrichtung 100 ist dazu ausgebildet, um eine Information über das Haushaltgerät 105 für den Nutzer 110 des Haushaltgeräts 105 bereitzustellen. Hierzu weist die Vorrichtung 100 eine Einleseeinrichtung 115, eine Auswähleinrichtung 120 und eine Sendeeinrichtung 125 auf, die beispielsweise als Hardware- oder Softwaremodule ausgeführt sein können. Die Einleseeinrichtung 115 ist dazu ausgebildet, um ein Statussignal 130 eingelesen, das eine Statusinformation über das Haushaltgerät 105 repräsentiert. Die Auswähleinrichtung 120 ist dazu ausgebildet, um unter Verwendung des Statussignals 130 und eines Zuständigkeitenplans 140 und/oder eines Anwesenheitssignals 145 zumindest den Nutzer 110 auszuwählen, wobei der Zuständigkeitenplan 140 eine Mehrzahl von hinterlegten Nutzern 110 des Haushaltgeräts 105 aufweist und/oder das Anwesenheitssignal 145 eine Anwesenheitsinformation über eine Anwesenheit zumindest eines im Zuständigkeitenplan 140 hinterlegten Nutzers 110 aufweist. Die Sendeeinrichtung 125 ist dazu ausgebildet, um ein Informationssignal 150 an den in der Auswähleinrichtung 120 ausgewählten Nutzer 110 zu senden, wobei das Informationssignal 150 die Statusinformation und/oder eine Zusatzinformation umfasst.

Lediglich beispielhaft ist das Haushaltgerät 105 gemäß diesem Ausführungsbeispiel als eine Geschirrspülmaschine ausgeformt. Gemäß einem alternativen Ausführungsbeispiel handelt es sich bei dem Haushaltgerät 105 um eine Waschmaschine, ein Gargerät, ein Kühlgerät, eine Dunstabzugshaube oder einen Kaffeeautomaten. Die Einleseeinrichtung 115 liest gemäß diesem Ausführungsbeispiel das Statussignal 130 ein, bei dem die Statusinformation eine Information darüber repräsentiert, dass ein Spülprogramm der Geschirrspülmaschine beendet wurde und/oder die Geschirrspülmaschine ausgeräumt werden kann. Unter Verwendung des Statussignals 130 wählt die Auswähleinrichtung 120 gemäß diesem Ausführungsbeispiel den Nutzer 110 aus dem Zuständigkeitenplan 140 aus, der unter Verwendung eines in dem Zuständigkeitenplan 140 hinterlegten Zuständigkeitenalgorithmus als zuständiger Nutzer erkannt wird. Gemäß diesem Ausführungsbeispiel wählt die Auswähleinrichtung 120 den Nutzer 110 aus dem Zuständigkeitenplan 140 aus, der unter Verwendung des Zuständigkeitenalgorithmus als zuständiger Nutzer erkannt wurde, wenn das Anwesenheitssignal 145 eine Anwesenheit des zuständigen Nutzers anzeigt. Hierzu liest die Einleseeinrichtung 115 oder eine weitere Einleseeinrichtung der Vorrichtung 100 gemäß diesem Ausführungsbeispiel das Anwesenheitssignal 145 ein, das gemäß diesem Ausführungsbeispiel ein WLAN-Verbindungssignal des Nutzers 110 repräsentiert. Das WLAN-Verbindungssignal zeigt gemäß diesem Ausführungsbeispiel an, dass ein mobiles Gerät 160 des zuständigen Nutzers 110 mit dem Haushaltgerät 105 über WLAN verbunden ist, was die Anwesenheit des Nutzers 110 anzeigt. Das Informationssignal 150 ist gemäß diesem Ausführungsbeispiel dazu ausgebildet, um eine Ausgabe der Statusinformation und/oder der Zusatzinformation unter Verwendung einer Ausgabeeinrichtung 162, gemäß einem Ausführungsbeispiel unter Verwendung eines Displays oder Lautsprechers des mobilen Geräts 160 des ausgewählten Nutzers 110, zu bewirken. Gemäß diesem Ausführungsbeispiel wird die Ausgabe der Statusinformation und/oder der Zusatzinformation als eine optische Anzeige 165 auf dem Display eines als Mobiltelefon ausgeformten mobilen Geräts 160 des ausgewählten Nutzers 110 bewirkt. Die optische Anzeige 165 umfasst gemäß diesem Ausführungsbeispiel eine Textnachricht, die folgenden Text beinhaltet:
"Hallo Lisa,
die Geschirrspülmaschine kann ausgeräumt werden!
Das ist heute deine Aufgabe."
Oder:
"Du hast
   (1)
neue Aufgabe"

Die Vorrichtung 100 ist gemäß einem Ausführungsbeispiel in oder an dem Haushaltgerät 105 angeordnet, beispielsweise in ein Steuergerät des Haushaltgeräts 105, beispielsweise in einer App implementiert. Die Vorrichtung 100 ist gemäß einem alternativen Ausführungsbeispiel zumindest teilweise oder komplett in einer Cloud oder dem mobilen Gerät 160 implementiert.

Die Vorrichtung 100 ist gemäß einem Ausführungsbeispiel dazu ausgebildet, um den Zuständigkeitenplan 140 unter Verwendung zumindest eines Eingabesignals, das eine Kontaktinformation des Nutzers 110 repräsentiert, und/oder des Zuständigkeitenalgorithmus zu generieren.

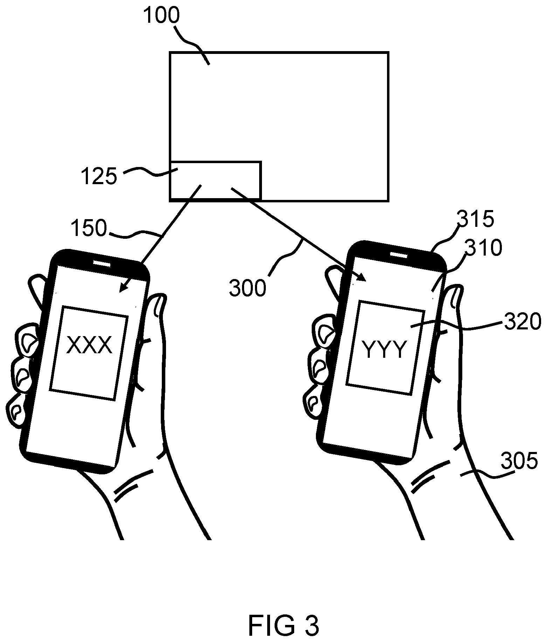

Im Folgenden werden Ausführungsbeispiele anhand der Figur 1 nochmals mit anderen Worten beschrieben:
Die hier vorgestellte Vorrichtung 100 ermöglicht personalisierte Push-Nachrichten von einem Haushaltsgerät 105 zu verschiedenen Nutzern 110. Anstatt Fehler- und Statusinformationen des Haushaltgeräts 105 per Push-Nachricht mit gleichem Nachrichteninhalt an alle angemeldeten mobilen Geräte 160, auch mobile Endgeräte genannt, zu verschicken, ist die Vorrichtung 100 vorteilhafterweise dazu ausgebildet, um personalisierte und/oder unterschiedliche Push-Nachrichten an die verschiedenen im Haushalt lebenden Personen zu senden, siehe hierzu auch Figur 3. Dies hilft, ein Zusammenleben einfacher zu gestalten, indem nur noch die Personen benachrichtigt werden, für die die Nachricht auch relevant ist.

Die Vorrichtung 100 verhindert, dass Informationen von einem vernetzten Haushaltsgerät 105 an alle angemeldeten Nutzer verschickt werden und bewirkt, dass nur dem "zuständigen" Benutzer eine Push-Nachricht geschickt wird. Eine unnötige Informationsflut an alle im Haushalt lebenden Personen wird dadurch vermieden. Gemäß einem alternativen Ausführungsbeispiel bewirkt die Vorrichtung 100, dass eine Nachricht über eine beispielsweise halbjährliche Dunstabzugsfilterreinigung eines als Dunstabzug ausgeformten Haushaltgeräts 105 nur an den jeweiligen technikaffinen Nutzer in der Haushaltsgemeinschaft geschickt wird. Dieser technikaffine Nutzer kann entsprechend in dem Zuständigkeitenplan 140 als zuständiger Nutzer, beispielsweise alleinzuständiger Nutzer, für die Dunstabzugsfilterreinigung hinterlegt sein. Nutzer, welche wissentlich Probleme beim Ein- und/oder Ausbau des Filters haben, können somit von dieser Information unbehelligt bleiben. Es erhalten also nur noch die Person(en) aus einem Haushalt oder einer Wohngruppe eine Nachricht, die auch wirklich betroffen sind.

Das Haushaltsgerät 105, insbesondere in Form einer Spül- oder Waschmaschine ist gemäß einem Ausführungsbeispiel dank der Vorrichtung 100 dahin gehend erweitert, dass es personifizierte Push-Nachrichten an alle in einem Haushalt oder in einer Wohngruppe lebenden Mitbewohner verschicken kann. Hierfür ist es notwendig, dass alle Nutzer 110 mit ihrem Konto an das Haushaltsgerät 105 bzw. der Cloud angemeldet sind. Folgende vier interessante Anwendungsfälle sind dank der Vorrichtung 100 oder einem Haushaltgerät 105 mit einer Vorrichtung 100 durchführbar:
Ein erster Anwendungsfall eignet sich für ein als Spül- oder Waschmaschine ausgeformtes Haushaltgerät 105. Es ist neben einem Autostart-Wochenplaner die Vorrichtung 100 mit dem Zuständigkeitenplan 140 in Form eines "Ausräumplaners" oder einer To-do-Liste für die Spülmaschine in einer App implementiert. In diesem Planer sind alle Nutzer 110 aufgeführt und der Reihe nach aufgelistet, wer für das Ausräumen zuständig ist. Eine Person A oder der Autostart-Wochenplaner startet bei Bedarf die Spülmaschine und nach Beendigung des Spülgangs wird das Informationssignal 150 an Person B verschickt, die eine Push-Nachricht an dem mobilen Gerät 160 von Person P bewirkt, die anzeigt, dass die Spülmaschine fertig und zum Ausräumen bereit und laut Ausräumplaner Person B hierfür verantwortlich ist. Gemäß einem Ausführungsbeispiel erhalten andere Nutzer ebenfalls abgewandelte Nachrichten, in denen über die ausräumfertige Maschine informiert wird, aber keine Aktion erforderlich ist, da Person B laut Ausräumplaner die Spülmasche auszuräumen hat, siehe hierzu Fig. 3. Eine potenzielle Push-Nachricht reagiert gemäß einem Ausführungsbeispiel unterschiedlich auf An- oder Abwesenheit einer Person, wobei die An- oder Abwesenheit über eine Verbindung zum Haushaltgerät 105 über WLAN oder mobile Daten festgestellt wird. Eine Zustellung oder Aufforderung zum Ausräumen des Haushaltgeräts 105 erfolgt gemäß einem Ausführungsbeispiel z. B. nur bei Anmeldung des mobilen Geräts 160 des zuständigen Nutzers 110 im WLAN-Netz und nicht wenn der zuständige Nutzer 110 außer Haus ist.

Vorteilhafterweise werden Haushaltsaufgaben zwischen Familienmitgliedern oder WG-Teilnehmern dank der Vorrichtung 100 gerechter aufgeteilt. Insbesondere Kinder können besser in den Familienalltag miteinbezogen werden. Ausreden, wie "Ich habe gerade erst gestern die Spülmaschine ausgeräumt" können durch die Vorrichtung 100, die auch als Ausräumplaner bezeichnet werden kann, dokumentiert und ggf. widerlegt werden.

Ein zweiter Anwendungsfall eignet sich für ein als Backofen, Mikrowelle oder Dampfgarer ausgeformtes Haushaltgerät 105. Eine Person A, z. B. eine Mutter, startet von zuhause oder unterwegs einen Aufwärm- oder Garvorgang. Nach Fertigstellung informiert die Vorrichtung 100 Person B, z. B. die Tochter, welche gerade Hausaufgaben im Kinderzimmer macht, über eine Push-Nachricht, dass das Essen fertig ist. Gemäß diesem Ausführungsbeispiel gibt die Vorrichtung 100 das Informationssignal 150 an einen beliebigen Nutzer aus, für den das Anwesenheitssignal 145 anliegt, welches die Anwesenheit dieses Nutzers anzeigt. Ein Vorteil hierbei ist, dass Handynachrichten in der Regel sofort gelesen werden und sich als als Kommunikationsmittel häufig besser eignen als lautes Rufen im gemeinsamen Haushalt.

Ein dritter Anwendungsfall eignet sich für Sonderreinigungsaufforderungen wie Filterreinigung bei einer Dunstabzugshaube, Siebreinigung bei einer Spülmaschine, Wärmetauscherreinigung bei einem Wäschetrockner oder Entkalkung/Brüheinheit-Reinigung bei einem Kaffeeautomat. Die Vorrichtung 105 oder das entsprechende Haushaltsgerät 100 schickt nur an das mobile Gerät 160 einer zuständigen Person die entsprechende Reinigungsaufforderung. Aufgaben wurden im Vorfeld in der App festgelegt und nach Affinität innerhalb der Familie aufgeteilt. Alle anderen Familienmitglieder werden nicht "belästigt" und somit entlastet. Die optische Anzeige 165 einer solchen Sonderreinigungsaufforderung enthält gemäß einem Ausführungsbeispiel eine Textnachricht mit folgendem Text:
"Deine Aufgaben:
- Bitte reinige den Filter!"

Ein vierter Anwendungsfall eignet sich für ein als Gefrierschrank ausgeformtes Haushaltgerät 105. Eine Person A hat neue Tiefkühlkost in den Gefrierschrank bevorratet und dabei die Tür nicht richtig geschlossen. Anschließend verlässt Person A das Haus. Die Vorrichtung 100 oder der Gefrierschrank verschickt zunächst deshalb nur das Informationssignal 150 in Form einer Warnmeldung an ein Familienmitglied, welches mit dem WLAN-Netz verbunden ist, um eine kurzfristige Abstellmaßnahme sicherzustellen.

Zusammengefasst realisiert die Vorrichtung 100 einen verbesserten Informationsfluss durch die Versendung von individuellen Push-Nachrichten an die Haushaltsgerätenutzer. Der Nutzer 110 bekommt nur noch die Nachrichten, die auch wichtig für ihn sind und ggf. eine Aktion von ihm erfordern. Durch einen in einer App integrierten To-do-Planer können Arbeitsaufgaben in Verbindung mit Haushaltsgeräten 100 in einer Haushaltsgemeinschaft gleichermaßen aufgeteilt und somit einen sinnvollen Beitrag zum Thema Smart Home leisten.

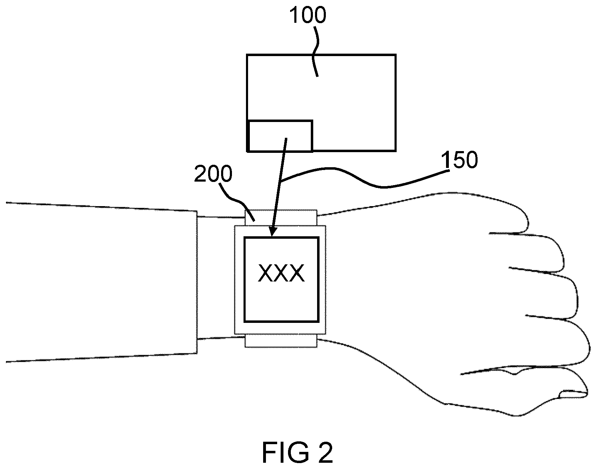

Figur 2 zeigt eine schematische Darstellung einer Vorrichtung 100 gemäß einem Ausführungsbeispiel. Dabei kann es sich um die anhand von Figur 1 beschriebene Vorrichtung 100 handeln, mit dem Unterschied, dass das Informationssignal 150 gemäß diesem Ausführungsbeispiel dazu ausgebildet ist, um die Ausgabe der Statusinformation und/oder der Zusatzinformation unter Verwendung der Ausgabeeinrichtung des mobilen Geräts 160 zu bewirken, das gemäß diesem Ausführungsbeispiel das Display einer Smartwatch 200 des ausgewählten Nutzers 110 ist.

Figur 3 zeigt eine schematische Darstellung einer Vorrichtung 100 gemäß einem Ausführungsbeispiel. Dabei kann es sich um die anhand von Figur 1 oder 2 beschriebene Vorrichtung 100 handeln. Die Sendeeinrichtung 125 der Vorrichtung 100 sendet gemäß diesem Ausführungsbeispiel ein weiteres Informationssignals 300 an zumindest einen in dem Zuständigkeitenplan hinterlegten weiteren Nutzer 305, wobei das weitere Informationssignal 300 die Statusinformation und/oder eine weitere Zusatzinformation umfasst, die sich von der Zusatzinformation unterscheidet. Bei dem weiteren Nutzer 305 handelt es sich gemäß diesem Ausführungsbeispiel um einen von der Auswähleinrichtung nicht als zuständig ausgewählten Nutzer 305. Das weitere Informationssignal 300 ist gemäß diesem Ausführungsbeispiel dazu ausgebildet, um eine Ausgabe der Statusinformation und/oder der weiteren Zusatzinformation unter Verwendung einer weiteren Ausgabeeinrichtung 310, gemäß diesem Ausführungsbeispiel unter Verwendung eines Displays oder Lautsprechers eines weiteren mobilen Geräts 315, zu bewirken. Gemäß diesem Ausführungsbeispiel wird die Ausgabe der Statusinformation und/oder der weiteren Zusatzinformation als eine optische Anzeige 320 auf dem Display eines Mobiltelefons des weiteren Nutzers 305 bewirkt. Die optische Anzeige 320 umfasst gemäß diesem Ausführungsbeispiel eine Textnachricht, die folgenden Text beinhaltet:
"Hallo Tom,
die Geschirrspülmaschine ist fertig.

Heute ist Lisa mit dem Ausräumen dran."

Die Vorrichtung 100 sendet also gemäß diesem Ausführungsbeispiel unterschiedliche Push-Nachrichten an verschiedene Personen.

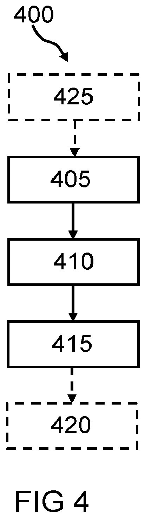

Figur 4 zeigt ein Ablaufdiagramm eines Verfahrens 400 zum Bereitstellen einer Information über ein Haushaltgerät für einen Nutzer des Haushaltgeräts gemäß einem Ausführungsbeispiel. Dabei kann es sich um ein Verfahren 400 handeln, das von der in einer der vorangegangenen Figuren beschriebenen Vorrichtung ansteuerbar oder ausführbar ist.

Das Verfahren 400 weist zumindest einen Schritt 405 des Einlesens, einen Schritt 410 des Auswählens und einen Schritt 415 des Sendens auf. Im Schritt 405 des Einlesens wird ein Statussignal eingelesen, das eine Statusinformation über das Haushaltgerät repräsentiert. Im Schritt 410 des Auswählens wird zumindest ein Nutzer unter Verwendung des Statussignals und eines Zuständigkeitenplans und/oder eines Anwesenheitssignals ausgewählt, wobei der Zuständigkeitenplan eine Mehrzahl von hinterlegten Nutzern des Haushaltgeräts aufweist und/oder das Anwesenheitssignal eine Anwesenheitsinformation über eine Anwesenheit zumindest eines im Zuständigkeitenplan hinterlegten Nutzers aufweist. Im Schritt 415 des Sendens wird ein Informationssignal an den im Schritt des Auswählens ausgewählten Nutzer gesendet, wobei das Informationssignal die Statusinformation und/oder eine Zusatzinformation umfasst.

Des Weiteren umfasst das Verfahren 400 gemäß diesem Ausführungsbeispiel einen optionalen Schritt 420 des Ausgebens und/oder einen optionalen Schritt 425 des Generierens.

Im Schritt 420 des Ausgebens wird die Statusinformation und/oder die Zusatzinformation unter Verwendung des Informationssignals und einer Ausgabeeinrichtung ausgegeben, insbesondere unter Verwendung eines Displays oder Lautsprechers eines mobilen Geräts. Der Schritt 420 des Ausgebens wird gemäß diesem Ausführungsbeispiel nach dem Schritt 415 des Sendens ausgeführt.

Im Schritt 425 des Generierens wird der Zuständigkeitenplan unter Verwendung zumindest eines Eingabesignals, das eine Kontaktinformation eines Nutzers repräsentiert, und/oder eines Zuständigkeitenalgorithmus generiert. Der Schritt 425 des Generierens wird gemäß diesem Ausführungsbeispiel vor dem Schritt 405 des Einlesens ausgeführt. Der Schritt 425 des Generierens kann ansprechend auf ein weiteres Eingabesignal, das eine zusätzliche Kontaktinformation eines zusätzlichen Nutzers repräsentiert, und/oder einen geänderten Zuständigkeitenalgorithmus erneut ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (400) zum Bereitstellen einer Information über ein Haushaltgerät (105) für einen Nutzer (110) des Haushaltgeräts (105), wobei das Verfahren (400) zumindest die folgenden Merkmale aufweist:
Einlesen (405) eines Statussignals (130), das eine Statusinformation über das Haushaltgerät (105) repräsentiert;
Auswählen (410) zumindest eines Nutzers (110) unter Verwendung des Statussignals (130) und eines Zuständigkeitenplans (140) und/oder eines Anwesenheitssignals (145), wobei der Zuständigkeitenplan (140) eine Mehrzahl von hinterlegten Nutzern (110; 305) des Haushaltgeräts (105) aufweist und/oder das Anwesenheitssignal (145) eine Anwesenheitsinformation über eine Anwesenheit zumindest eines im Zuständigkeitenplan (140) hinterlegten Nutzers (110; 305) aufweist; und
Senden (415) eines Informationssignals (150) an den im Schritt (410) des Auswählens ausgewählten Nutzer (110), wobei das Informationssignal (150) die Statusinformation und/oder eine Zusatzinformation umfasst.

2. Verfahren (400) gemäß Anspruch 1, mit einem Schritt (420) des Ausgebens der Statusinformation und/oder der Zusatzinformation unter Verwendung des Informationssignals (150) und einer Ausgabeeinrichtung (162), insbesondere eines Displays oder Lautsprechers eines mobilen Geräts (160; 200).

3. Verfahren (400) gemäß einem der der vorangegangenen Ansprüche, bei dem im Schritt (415) des Sendens ein weiteres Informationssignal (300) an zumindest einen in dem Zuständigkeitenplan (140) hinterlegten weiteren Nutzer (305) gesendet wird, wobei das weitere Informationssignal (300) die Statusinformation und/oder eine weitere Zusatzinformation umfasst, die sich von der Zusatzinformation unterscheidet.

4. Verfahren (400) gemäß einem der der vorangegangenen Ansprüche, bei dem im Schritt (410) des Auswählens zumindest ein Nutzer (110) aus dem Zuständigkeitenplan (140) ausgewählt wird, für den das Anwesenheitssignal (145) eine Anwesenheit anzeigt.

5. Verfahren (400) gemäß einem der der vorangegangenen Ansprüche, bei dem im Schritt (410) des Auswählens der Nutzer (110) aus dem Zuständigkeitenplan (140) ausgewählt wird, der unter Verwendung eines in dem Zuständigkeitenplan (140) hinterlegten Zuständigkeitenalgorithmus als zuständiger Nutzer (110) erkannt wird.

6. Verfahren (400) gemäß Anspruch 5, bei dem im Schritt (410) des Auswählens der Nutzer (110) aus dem Zuständigkeitenplan (140) ausgewählt wird, der unter Verwendung des in dem Zuständigkeitenplan (140) hinterlegten Zuständigkeitenalgorithmus als zuständiger Nutzer (110) erkannt wird, wenn das Anwesenheitssignal (145) eine Anwesenheit des zuständigen Nutzers (110) anzeigt.

7. Verfahren (400) gemäß einem der der vorangegangenen Ansprüche, mit einem Schritt (425) des Generierens des Zuständigkeitenplans (140), in dem unter Verwendung zumindest eines Eingabesignals, das eine Kontaktinformation eines Nutzers (110; 305) repräsentiert, und/oder eines Zuständigkeitenalgorithmus der Zuständigkeitenplan (140) generiert wird.

8. Vorrichtung (100), die ausgebildet ist, um die Schritte (405, 410, 415, 420, 425) des Verfahrens (400) gemäß einem der vorangegangenen Ansprüche in entsprechenden Einheiten (115, 120, 125, 140, 162) anzusteuern und/oder auszuführen.

9. Haushaltgerät (105) mit einer Vorrichtung (100) gemäß Anspruch 8.

10. Haushaltgerät (105) gemäß Anspruch 9, das eine Geschirrspülmaschine, eine Waschmaschine, ein Gargerät, ein Kühlgerät, eine Dunstabzugshaube oder ein Kaffeeautomat ist.

11. Computer-Programmprodukt mit Programmcode zur Durchführung des Verfahrens (400) nach einem der Ansprüche 1 bis 7, wenn das Computer-Programmprodukt auf einer Vorrichtung ausgeführt wird.
